# EUROPÄISCHE PATENTSCHRIFT

(11) **EP 0 401 659 B1**
(45) Veröffentlichungstag und Bekanntmachung des Hinweises auf die Patenterteilung: **21.07.1993**
(21) Anmeldenummer: 90110246.7
(22) Anmeldetag: 30.05.1990
(51) Int. Cl.: B62D 25/18

(54) **Schmutzfängerbefestigung**
Fixing of a mud flap
Fixation d'une bavette de garde-boue

(30) Priorität: 06.06.1989 DE 3918802
(43) Veröffentlichungstag der Anmeldung: 12.12.1990
(73) Patentinhaber: CONA GmbH -Industrieerzeugnisse von hohem Rang-, D-77694 Kehl (DE)
(72) Erfinder: Arenhold, Knut, D-2000 Hamburg 52 (DE)
(74) Vertreter: UEXKÜLL & STOLBERG

(56) Entgegenhaltungen:
- DE-A- 2 851 748
- DE-B- 2 352 472
- DE-C- 2 342 365
- DE-C- 2 905 753

## Beschreibung

Die Erfindung bezieht sich auf eine Schmutzfängerbefestigung zur lösbaren Verbindung des vom Randbereich des Anpassungsansatzes gebildeten, zur Anlage am Kotflügelfalz des Kraftfahrzeugs kommendem Befestigungsbereichs eines Schmutzfängerlappens, der einen Lappenhauptkörper aufweist, in dessen Verlängerung der Anpassungansatz liegt, mit mindestens einer Klammer zur klemmenden Halterung des Schmutzfängerlappens am Kotflügelfalz, die ein Klemmteil aufweist, das über zwei in Richtung der Längserstreckung des Befestigungsbereichs im Abstand voneinander angeordnete Schrauben mit dem anderen Klammerteil verbunden ist, wobei zumindest das Klemmteil an seiner die Klemmöffnung bildenden Seite in Richtung auf das Klammerteil abgeschrägte Eckbereich hat.

Bei einer bekannten, gattungsgemäßen Schmutzfängerbefestigung dieser Art (DE-A 28 51 748) wird zur klemmenden Befestigung des an sich universell einsetzbaren Schmutzfängerlappens, der einen Lappenhauptkörper und einen im wesentlichen in der gleichen Ebene wie dieser liegenden Anpassungsansatz aufweist, eine Klammer verwendet, die aus einem länglichen Klemmteil und einem entsprechend geformten länglichen Klammerteil besteht, die durch zwei im Abstand voneinander befindliche Schrauben miteinander verbunden sind und deren die Klemmöffnung bildenden, durchgehenden Seiten, die parallel zur Verbindungslinie der beiden Schrauben verlaufen, an ihren äußeren Eckbereichen abgeknickt sind, um auf diese Weise im geklemmten Zustand einen festen Eingriff von Klemmteil mit der Innenseite des Kotflügelfalzes und von Klammerteil mit der nach vorn gerichteten Fläche des Befestigungsbereichs des Schmutzfängerlappens zu bewirken.

Es hat sich gezeigt, daß eine derartige Klemme häufig nicht geeignet ist, ausreichende Klemmkräfte aufzubringen, um den Schmutzfängerlappen am Kotflügelfalz fest und sicher zu halten.

Darüber hinaus kann es bei bestimmten Verläufen von Kotflügelfalzen von Personenkraftwagen, insbesondere dann, wenn der Kotflügelfalz bzw. seine zur Fahrzeugmitte gerichtete freie Kante sehr steil und nahezu senkrecht verläuft, schwierig sein, den gesamten, die Klemmöffnung bildende Seite des Klemmteils in Eingriff mit dem Kotflügelfalz zu bringen, weil sich die Klammer an der Befestigungsstelle nur bis zur Anlage der beiden Schrauben an der Innenkante des Anpassungsansatzes auf den richtig ausgerichteten Schmutzfängerlappen aufbringen läßt, während der Verlauf des Kotflügelfalzes an dieser Stelle so stark vom Verlauf der Innenkannte des Anpassungsansatzes des ausgerichteten Schmutzfängerlappens abweicht, daß sich der Kotflügelfalz im unteren Bereich der Klammer außerhalb von dieser befindet. In einem solchen Fall sind die aufbringbaren Klemmkräfte dann bei weitem nicht ausreichend, um den Schmutzfängerlappen im Betrieb fest mit dem Kotflügelfalz zu verbinden.

Es ist Aufgabe der Erfindung, eine Schmutzfängerbefestigung zu schaffen, die bei Verwendung einer einzigen Klammer auch bei ungewöhnlichen Verläufen des Kotflügelfalzes eine sichere Befestigung des Schmutzfängerlappens an diesem ermöglicht und so universell einsetzbar ist.

Zur Lösung dieser Aufgabe wird eine Schmutzfängerbefestigung der eingangs erwähnten Art erfindungsgemäß derart ausgestaltet, daß die die Klemmöffnung bildende Seite des Klemmteils eine zu der den Schrauben abgewandten Seite offene Mittelaussparung aufweist, deren Seiten von zwei Klemmvorsprüngen gebildet werden, daß beide Eckbereiche der freien Enden der Klemmvorsprünge in Richtung auf das Klammerteil abgeknickt sind und daß der Abstand von der zugehörigen Schraube zum freien Ende des im montierten Zustand höher liegenden Klemmvorsprungs kleiner ist als der entsprechende Abstand beim anderen Klemmvorsprung.

Bei der erfindungsgemäßen Schmutzfängerbefestigung wird somit die Verwendung einer einzigen Klemme ermöglicht, indem zumindest deren Klemmteil vier in Richtung auf das Klammerteil abgewinkelte Eckbereiche aufweist, die im montierten Zustand in verkrallenden Eingriff mit der Innenseite des Kotflügelfalzes bzw. mit an dieser Innenseite vorgesehenem Isolieroder Dämmaterial kommen, so daß, verglichen mit der vorbekannten Klammer mit zwei Schrauben, eine deutlich höhere Klemmwirkung erzielt wird, durch die eine sichere Verbindung von Schmutzfängerlappen und Kotflügelfalz sichergestellt wird.

Darüber hinaus wird durch die unterschiedlichen Längen der Klemmvorsprünge des Klemmteils auch dann ein wirksamer Eingriff aller vier abgeknickten Eckebereiche dieser Klemmvorsprünge ermöglicht, wenn der Kotflügelfalz einen verhältnismäßig steilen Verlauf hat, weil sich der im montierten Zustand untere Klemmvorsprung infolge seiner größeren Länge auch dann noch in Eingriff mit der Rückseite des Kotflügelfalzes befindet, wenn dessen Innenkante verglichen zur Innenkante des Anpassungsansatzes des ausgerichteten Schmutzfängerlappens einen wesentlich steileren Verlauf hat.

Die Schrauben der Klammer sind vorzugsweise jeweils auf der Längsmittelachse des zugehörigen Klemmvorsprungs angeordnet, so daß sich eine symmetrische Lage bezüglich der in Eingriff mit der Rückseite des Kotflügelfalzes kommenden Eckbereiche des Klemmteils ergibt.

Um die Anpassung der erfindungsgemäßen Schmutzfängerbefestigung an steile Kotflügelfalzverläufe noch weiter zu verbessern, kann die Außenkante des freien Endes zumindest des im montierten Zustand tiefer liegenden Klemmvorsprungs mit der Verbindungslinie der beiden Schrauben einen spitzen Winkel einschließen, dessen Scheitel im montierten Zustand höher als die höhere der beiden Schrauben liegt. Vorzugsweise liegen dabei die Außenkanten der freien Enden beider Klemmvorsprünge auf einer gemeinsamen Geraden.

Dadurch, daß in diesem Fall der untere Eckbereich des Klemmvorsprungs einen größeren Abstand von der Schraube hat als der obere Eckbereich, wird auch noch im Verlauf der Breite des Klemmvorsprungs eine entsprechende Anpassung an steile Kotflügelfalzverläufe erreicht, da, entsprechend der vorstehenden Beschreibung, die im montierten Zustand tiefer liegenden Bereiche des Klemmteils größere Abstände von der zugehörigen Schraube haben als die höher liegenden Bereiche.

Um die Montage ohne Handhabung zahlreicher Einzelteile einfach durchführen zu können, können im Klemmteil Gewindebohrungen zur Aufnahme der Schrauben vorhanden sein, so daß die Schrauben mit ihren Köpfen an der Außenseite des Klammerteilss angeordnet und von dieser für den Montierenden leicht zugänglichen Seite her festgezogen werden können, um die Klammer in ihren geschlossenen Zustand zu bringen.

An der den Klemmvorsprüngen abgewandten Seite des Klemmteils ist mindestens eine eine Abstützung bildende Abwinklung zum Eingriff mit dem Klammerteil vorgesehen.

In einer bevorzugten Ausgestaltung ist das Klammerteil von einem sich im montierten Zustand an der dem Kotflügelfalz abgewandten Fläche des Befestigungsbereichs erstreckenden Verstärkungsblech gebildet, das Ansätze für den Eingriff der Schrauben aufweist. Dieses an sich bekannte Verstärkungsblech (DE-C 23 42 365) wird also zusätzlich als Klammerteil benutzt. Da das Verstärkungsblech normalerweise mit dem Schmutzfängerlappen vernietet ist, wird die Klammer nach entsprechender Positionierung der Klemmvorsprünge des Klemmteils hinter dem Kotflügelfalz und Ausrichtung des Schmutzfängerlappens durch Halten des Schmutzfängerlappens in ihrer Lage festgehalten, und es ist dann lediglich erforderlich, die Schrauben der Klammer anzuziehen, ohne daß die Gefahr besteht, daß sich die Klammer bei diesem Montagevorgang gegenüber dem Schmutzfängerlappen und/oder gegenüber dem Kotflügelfalz verlagert.

Es ist selbstverständlich auch möglich, das Klammerteil entsprechend dem Klemmteil auszubilden und es somit mit zwei den Klemmvorsprüngen entsprechenden Klammervorsprüngen zu versehen, die abgeknickte Eckbereiche haben, um einen sicheren Eingriff mit dem Material des Schmutzfängerlappens zu erreichen, wobei die Klammervorsprünge üblicherweise gleiche Länge haben können.

In diesem Zusammenhang sei erwähnt, daß durch die Verwendung eines einteiligen Klemmteils statt zweier getrennter Bauteile auch erreicht wird, daß durch eine Bewegung der gesamte Klemmbereich geöffnet wird und in die Montagestellung gebracht werden kann, während dies bei getrennter Ausbildung das unabhängige und daher schwierige Öffnen der beiden Teile erforderte.

Die Erfindung wird im folgenden anhand der Figuren näher erläutert.
- Figur 1: zeigt in einer perspektivischen Teildarstellung den Bereich des vorderen linken Radkastens eines Personenkraftwagens sowie in einer vergrößerten Teildarstellung den in diesem Bereich vorhandenen Kotflügelfalz.
- Figur 2: zeigt die Befestigung eines Schmutzfängers am teilweise dargestellten Kotflügelfalz entsprechend Figur 1.
- Figur 3: zeigt eine Ansicht auf die die Klammer bildenden Befestigungsteile für den Schmutzfänger gemäß Figur 2 von der Seite des Klemmteils gesehen.
- Figur 4: zeigt eine andere Form einer Klammer zur Befestigung eines Schmutzfängers.

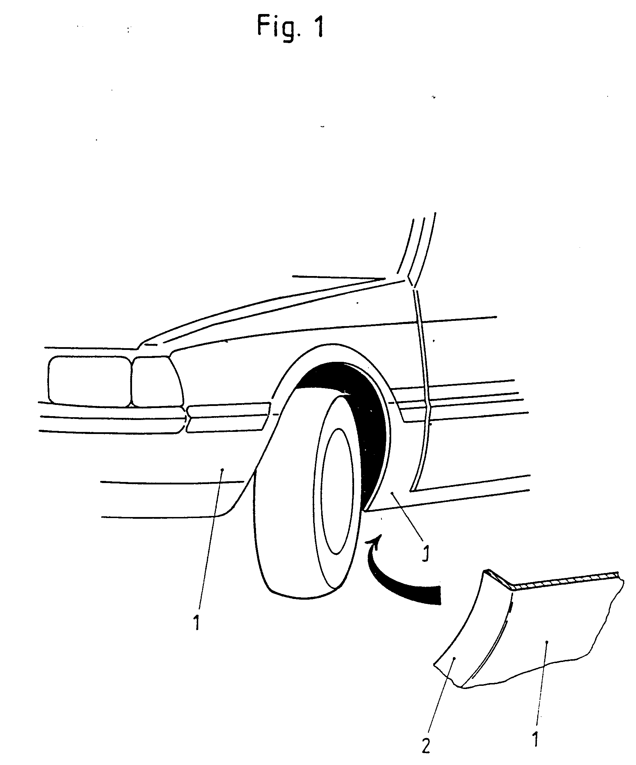

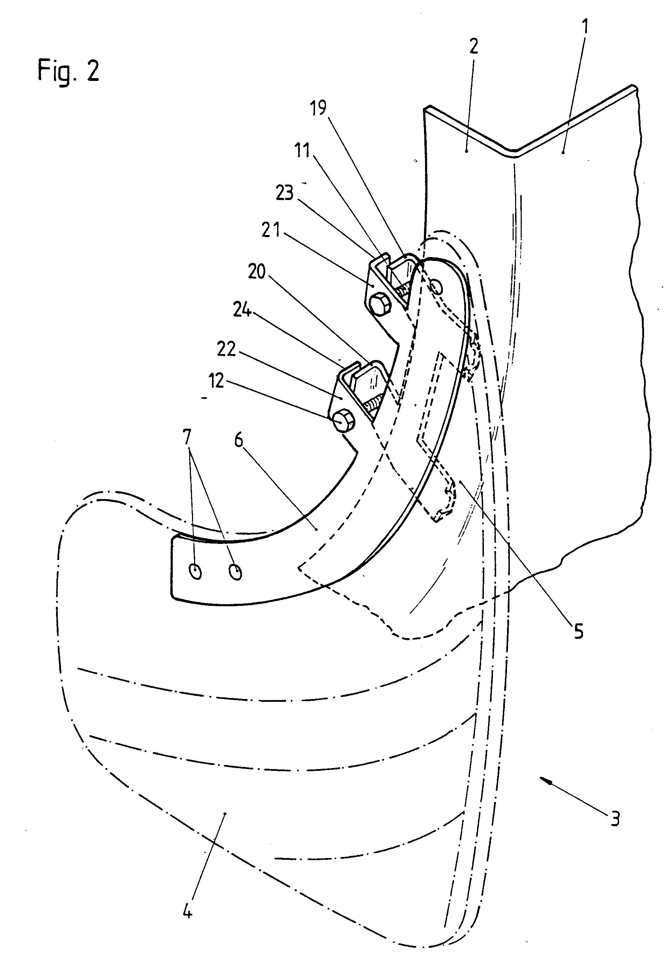

Wie in Figur 1 dargestellt, weisen Personenkraftwagen im Bereich der Radkästen üblicherweise einen sogenannten Kotflügelfalz 2 auf, der durch Abwinklungen der Karosserie 1 im Bereich der Radkästen gebildet ist und der in vielen Fällen zur Befestigung von Schmutzfängern dient, wie dies in der DE-C 23 42 365 und auch in der DE-C 29 05 753 beschrieben ist. Diese Schmutzfänger haben, wie in Figur 2 strichpunktiert angedeutet, einen Schmutzfängerlappen 3 mit einem im wesentlichen ebenen Lappenhauptkörper 4 und einem sich als Verlängerung an diesen nach oben anschließenden Anpassungsansatz 5, der mit seinem Innenkantenbereich einen zur Anlage am Kotflügelfalz 2 kommenden Befestigungsbereich bildet, wobei der Verlauf der Innenkante des Anpassungsansatzes 5 möglichst genau mit dem Verlauf der freien Kante des Kotflügelfalzes 2 übereinstimmen sollte. Da dies jedoch erfordern würde, daß für praktisch jeden Typ eines Personenkraftwagens eine bestimmte Form des Anpassungsansatzes erforderlich wäre, werden hier Kompromisse geschlossen, so daß recht erhebliche Abweichungen der Verläufe von Innenkante des Anpassungsansatzes 5 und freier Kante des Kotflügelfalzes 2 möglich sind, wenn nur eine sicherer Befestigung des Schmutzfängerlappens 3 am Kotflügelfalz 2 bewirkt werden kann.

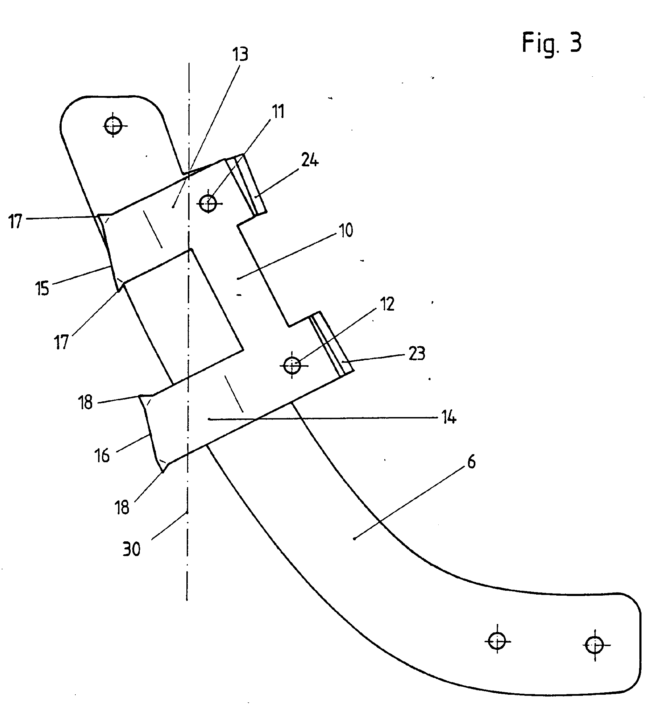

In dem in den Figuren 2 und 3 dargestellten Ausführungsbeispiel ist auf der im montierten Zustand dem Rad zugewandten, also der dem Kotflügelfalz 2 abgewandten Fläche des Schmutzfängerlappens 3 im Bereich der Innenkante des Anpassungsansatzes 5 ein verbiegbares Verstärkungsblech 6 vorgesehen, das mittels Nieten 7 im Bereich der Oberkante des Lappenhauptkörpers 4 am Lappenhauptkörper 4 befestigt ist. Form und Aufgabe eines derartigen Verstärkungsbleches sind in der DE-C 23 42 365 beschrieben.

Am Verstärkungsblech 6 sind im Abstand voneinander an der sich an der Innenkante des Anpassungsansatzes 5 befindenden Kante zwei Ansätze 21, 22 ausgebildet, die im wesentlichen in der Ebene des Verstärkungsbleches 6 liegen und an ihren freien Enden Abwinklungen 23 und 24 bilden. In den Ansätzen 21 und 22 sind Durchgangsbohrungen vorhanden, durch die Schrauben 11, 12 gesteckt sind, die zur Verbindung mit dem Klemmteil 10 dienen.

Das Klemmteil 10 hat zwei beispielsweise in Abstand von 50 bis 58 mm angeordnete Gewindebohrungen, durch die sich die Schrauben 11 und 12 erstrecken. Es weist zwei im wesentlichen parallele Klemmvorsprünge 13, 14 auf, die zwischen sich eine beispielsweise eine Breite von 30 mm bis 35 mm aufweisende Mittelaussparung bilden, die zu der den Schrauben 11 und 12 abgewandten Seite geöffnet ist. An der den Schrauben 11 und 12 näheren Seite des Klemmteils 10 sind Abwinklungen 19 und 20 vorhanden, die den Abwinklungen 23 und 24 der Klammervorsprünge 21 und 22 entsprechen und diesen eine Abstützung bildend benachbart angeordnet sind.

Die freien Eckbereiche der Klemmvorsprünge 13 und 14 sind in Richtung auf das Verstärkungsblech 6 abgeknickt und die so gebildeten Abknickungen 17 und 18 kommen im montierten Zustand in Eingriff mit der hinteren Seite des Kotflügelfalzes 12 bzw. mit auf dieser hinteren Seite aufgebrachtem Beschichtungsmaterial (Figur 2).

Wie Figur 3 zu entnehmen ist, ist die Länge des Klemmvorsprungs 13 von der Schraube 11, die mittig bezüglich dieses Klemmvorsprungs 13 angeordnet ist, kürzer als die entsprechende Länge des Klemmvorsprungs 14. Darüber hinaus liegen die beiden freien Außenkante 15 und 16 der Klemmvorsprünge 13 und 14 auf einer Geraden, die mit der Geraden durch die Schrauben 11 und 12 einen spitzen Winkel bildet, wobei der Scheitel des Winkels oberhalb der Schraube 11 liegt. Dadurch hat die in Figur 3 untere Ecke 17 bzw. 18 des Klemmvorsprungs 13 bzw. 14 einen größeren Abstand von der zugehörigen Schraube 11 bzw. 12 als die in Figur 3 obere Ecke 17 bzw. 18.

Durch diese ungleiche Ausbildung der beiden Klemmvorsprünge 13 und 14 kann eine Befestigung des Schmutzfängers auch an einem verhältnismäßig steil verlaufenden Kotflügelfalz erfolgen, wie er schematisch durch die gestrichelte Linie 30 in Figur 3 angedeutet ist, denn auch bei einem derartigen Verlauf ist ein sicherer Eingriff der abgeknickten Ecken 18 des Klemmvorsprungs 14 mit der hinteren Seite des Kotflügelfalzes 2 möglich. Hätte der Klemmvorsprung 14 die gleiche Länge wie der Klemmvorsprung 13, so ließe sich im dargestellten Fall zumindest mit der unteren Abknickung 18 des Klemmvorsprungs 14 kein Eingriff mit dem Kotflügelfalz 2 mehr erreichen, und in vielen Fällen könnte der untere Klemmvorsprung 14 überhaupt nicht zur klemmenden Anlage am Kotflügelfalz kommen. Dies führt aber zu einer nicht ausreichenden Befestigung des Schmutzfängers.

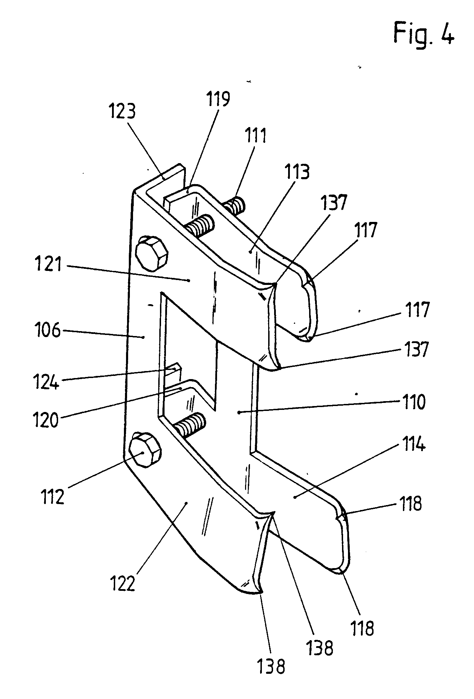

In dem in Figur 4 gezeigten Ausführungsbeispiel sind dem Ausführungsbeispiel gemäß Figuren 2 und 3 entsprechende Teile und Bereiche mit um 100 erhöhten Bezugszeichen bezeichnet, und bereits beschriebene Teile werden nicht noch einmal beschrieben.

Abweichend von dem Ausführungsbeispiel gemäß Figuren 2 und 3 wirkt bei dem Ausführungsbeispiel gemäß Figur 4 mit dem Klemmteil 110 statt an einem Verstärkungsblech ausgebildete Klammervorsprünge ein Klammerteil 106 zusammen, das Klammervorsprünge 121 und 122 entsprechend den Klammervorsprüngen 21 und 22 aufweist, wobei diese Bestandteil des Klammerteils 106 sind und zwischen sich einen Mittelausschnitt bilden, der zur gleichen Seite offen ist wie die Mittelaussparung zwischen den Klemmvorsprüngen 113 und 114. Diese Klammervorsprünge 121 und 122 sind an ihren freien Ecken in Richtung auf das Klemmteil 110 angeknickt und bilden so Eingriffsbereiche 137 und 138 für den Eingriff mit der vorderen Fläche des am Kotflügelfalz zu befestigenden Schmutzfängerlappens.

Zur Befestigung eines solchen Schmutzfängers wird dieser in der entsprechenden Position zur Anlage am Kotflügelfalz gebracht und dann die Klammer gemäß Figur 4 an der geeignete Stelle so über den Kotflügelfalz und den Schmuztfängerlappen geschoben, daß die Klemmvorsprünge 113 und 114 den Kotflügelfalz hintergreifen und die Klammervorsprünge 121 und 122 auf der dem Kotflügelfalz abgewandten Fläche des Schmutzfängerlappens aufliegen. Dabei ergibt sich wegen der unterschiedlichen Längen der Klammervorsprünge 113 und 114 die bereits in Zusammenhang mit dem Figuren 2 und 3 erläuterte Möglichkeit, auch bei steilen Kotflügelfalzverläufen eine sichere Befestigung zu erreichen.

Es sei erwähnt, daß in beiden Ausführungsbeispielen eine besonders einfache Montage am Kotflügelfalz dadurch ermöglicht wird, daß nach Ausrichtung des Schmutzfängerlappens lediglich eine einzige Klammer in klemmenden Eingriff mit dem Kotflügelfalz gebracht zu werden braucht, die bei dem Ausführungsbeispiel gemäß Figuren 2 und 3 durch Halten des Schmutzfängers in der gewünschten Stellung sicher positioniert bleibt und die sich auch bei dem Ausführungsbeispiel gemäß Figur 4 einfach festhalten läßt, während bei der sonst üblichen Verwendung von zwei getrennten Klammern erhebliche Schwierigkeiten bei der Montage auftreten, da sich die Klammern während der Montage immer wieder gegeneinander und gegen den Schmutzfängerlappen verlagern können.

## Patentansprüche

1. Schmutzfängerbefestigung zur lösbaren Verbindung des vom Randbereich des Anpassungsansatzes (5) gebildeten, zur Anlage am Kotflügelfalz (2) des Kraftfahrzeugs kommenden Befestigungsbereichs eines Schmutzfängerlappens (3), der einen Lappenhauptkörper (4) aufweist, in dessen Verlängerung der Anpassungsansatz (5) liegt, mit mindestens einer Klammer zur klemmenden Halterung des Schmutzfängerlappens (3) am Kotflügelfalz (2), die ein Klemmteil (10; 110) aufweist, das über zwei in Richtung der Längserstreckung des Befestigungsbereichs im Abstand voneinander angeordnete Schrauben (11, 12; 111, 112) mit dem anderen Klammerteil (6, 21, 22; 106) verbunden ist, wobei zumindest das Klemmteil (10; 110) an seiner die Klemmöffnung bildenden Seite in Richtung auf das Klammerteil (6, 21, 22; 106) abgeknickte Eckebereiche (17, 18; 117, 118) hat, **dadurch gekennzeichnet,** daß die die Klemmöffnung bildende Seite des Klemmteils (10; 110) eine zu der den Schrauben (11, 112; 111, 112) abgewandten Seite offene Mittelaussparung aufweist, deren Seiten von zwei Klemmvorsprüngen (13, 14; 113, 114) gebildet werden, daß beide Eckbereiche (17, 18; 117, 118) der freien Enden der Klemmvorsprünge (13, 14; 113, 114) in Richtung auf das Klammerteil (6, 21, 22; 106) angeknickt sind und daß der Abstand von der zugehörigen Schraube (11; 111) zum freien Ende des im montierten Zustand höher liegenden Klemmvorsprungs (13; 113) kleiner ist als der entsprechende Abstand beim anderen Klemmvorsprung (14; 114).

2. Schmutzfängerbefestigung nach Anspruch 1, **dadurch gekennzeichnet,** daß die Schrauben (11, 12; 111, 112) jeweils auf der Längsmittelachse des zugehörigen Klemmvorsprungs (13, 14; 113, 114) angeordnet sind.

3. Schmutzfängerbefestigung nach Anspruch 1 oder 2, **dadurch gekennzeichnet,** daß die Außenkante (16) des freien Endes zumindest des im montierten Zustand tiefer liegenden Klemmvorsprungs (14) mit der Verbindungslinie der beiden Schrauben (11, 12) einen spitzen Winkel einschließt, dessen Scheitel im montierten Zustand höher als die höher liegende der beiden Schrauben (11) liegt.

4. Schmutzfängerbefestigung nach Anspruch 3, **dadurch gekennzeichnet,** daß die Außenkanten (15, 16) der beiden Klemmvorsprünge (13, 14) auf einer gemeinsamen Geraden liegen.

5. Schmutzfängerbefestigung nach einem der Ansprüche 1 bis 4, **dadurch gekennzeichnet,** daß an der den Klemmvorsprüngen (13, 14; 113, 114) abgewandten Seite des Klemmteils (10; 110) mindestens eine Abwinklung (19, 20; 119, 120) zum Eingriff mit dem Klammerteil (6, 21, 22; 106) vorgesehen ist.

6. Schmutzfängerbefestigung nach einem der Ansprüche 1 bis 5, **dadurch gekennzeichnet,** daß das Klemmteil (10; 110) Gewindebohrungen für die Schrauben (11, 12; 111, 112) aufweist.

7. Schmutzfängerbefestigung nach einem der Ansprüche 1 bis 6, **dadurch gekennzeichnet,** daß das Klammerteil von einem sich im montierten Zustand an der dem Kotflügelfalz (2) abgewandten Fläche des Befestigungsbereichs erstreckenden Verstärkungsblech (6) gebildet ist, das Ansätze (21, 22) für den Eingriff der Schrauben (11, 12) aufweist.

8. Schmutzfängerbefestigung nach einem der Ansprüche 1 bis 6, **dadurch gekennzeichnet,** daß das Klammerteil (106) an der die Klemmöffnung bildenden Seite einen zu der den Schrauben (111, 112) abgewandten Seite offenen Mittelausschnitt aufweist, dessen Seiten von zwei Klammervorsprüngen (121, 122) gebildet werden, und daß die beiden Eckbereiche (137, 138) der freien Enden der Klammervorsprünge (121, 122) in Richtung auf das Klemmteil (110) abgeknickt sind.

## Claims

1. Mud flap fixing system for the detachable connection of an attachment area of a mud flap (3) formed by the edge area of the fixing attachment (5), which comes into contact at the wheel arch section (2) of the motor vehicle and which is provided with a main flap portion (4), in the extension of which the fixing attachment (5) is located, with at least one clamp for the holding by clamping action of the mud flap (3) at the wheel arch section (2), the clamp being provided with a clamping part (10;110), which is connected to the other clamp part (6, 21, 22; 106) with two bolts (11, 12: 111, 112) disposed with a clearance between them in the direction of the longitudinal extension of the attachment area with at least the clamping part (10; 110) at its side forming the clamping opening in the direction of the clamp part (6, 21, 22; 106) being provided with bent corner areas (17, 18; 117, 118), characterized in that the side of the clamping part (10; 110) forming the clamping opening is provided with a centre recess which is open to the side which is turned away from the bolts (11, 112; 111, 112) with the sides of this centre recess being formed by two clamping protrusions (13, 14; 113, 114), that both corner areas (17, 18; 117, 118) of the free ends of the clamping protrusions (13, 14; 113, 114) are bent in the direction of the clamp part (6, 21, 22; 106) and in that the distance from the associated bolt (11; 111) to the free end of the clamping protrusion (13; 113) located in a higher position in the assembled condition is smaller than the corresponding distance in the case of the other clamping protrusion (14; 114).

2. Mud flap fixing system according to claim 1, characterized in that the bolts (11, 12; 111, 112) are disposed in each case on the longitudinal middle axis of the associated clamping protrusion (13, 14; 113, 114).

3. Mud flap fixing system according to claim 1 or 2, characterized in that the outer edge (16) of the free end at least of the clamping protrusion (14) located lower down in the assembled condition encloses an acute angle with the connecting line of the two bolts (11, 12), the apex of which in the assembled condition is located higher than the bolt with the higher location of the two bolts (11).

4. Mud flap fixing system according to claim 3, characterized in that the external edges (15, 16) of the two clamping protrusions (13, 14) are located on a common straight line.

5. Mud flap fixing system according to one of claims 1 to 4, characterized in that on the side of the clamping part (10; 110) turned away from the clamping protrusions (13, 14; 113, 114) at least one bend (19, 20: 119, 120) is provided for engagement with the clamp part (6, 21, 22; 106).

6. Mud flap fixing system according to one of claims 1 to 5, characterized in that the clamping part (10; 110) is provided with threaded bores for the bolts (11, 12; 111, 112).

7. Mud flap fixing system according to one of claims 1 to 6, characterized in that the clamp part is formed by a reinforcement plate (6) which extends in the assembled condition at the surface of the attachment area turned away from the wheel arch section (2), this reinforcement plate (6) being provided with protrusions (21, 22) for the engagement of the bolts (11, 12).

8. Mud flap fixing system according to one of claims 1 to 6, characterized in that the clamp part (106) is provided at the side forming the clamping opening with a centre cutaway section which is open to the side turned away from the bolts (111, 112), with the sides of this centre cutaway section being formed by two clamp protrusions (121, 122) and in that the two corner areas (137, 138) of the free ends of the clamp protrusions (121, 122) being bent in the direction of the clamping part (110).

## Revendications

1. Fixation pour bavette de garde-boue, permettant la liaison amovible de la zone de fixation d'une bavette de garde-boue (3) comprenant un corps principal de bavette (4) dans le prolongement duquel est disposé un talon d'adaptation (5), cette zone de fixation étant formée par la zone marginale du talon d'adaptation (5) et venant en appui sur le retour d'aile (2) du véhicule automobile, cette fixation de bavette de garde-boue comprenant au moins une pince permettant de maintenir par pincement le talon (3) de la bavette de garde-boue sur le retour d'aile (2) et comprenant une partie de pincement (10 ; 110) qui est reliée à l'autre partie de pince (6, 21, 22 ; 106) par l'intermédiaire de deux vis (11, 12 ; 111, 112) disposées à distance l'une de l'autre dans la direction de l'étendue longitudinale de la zone de fixation, au moins la partie de pincement (10; 110) comportant, sur sa face délimitant l'ouverture de pincement, des zones d'angle (17, 18 ; 117, 118) pliées en direction de la partie de pince (6, 21, 22; 106), caractérisée en ce que la face de la pièce de pincement (10 ; 110) qui délimite l'ouverture de pincement comporte un évidement central qui est ouvert du côté situé à l'opposé des vis (11, 12 ; 111, 112) et dont les côtés sont formés par deux pattes de pincement (13, 14 ; 113, 114), en ce que les deux zones d'angle (17, 18 ; 117, 118) des extrémités libres des pattes de pincement (13, 14 ; 113, 114) sont pliées en direction de la partie de pince (6, 21, 22 ; 106) et en ce que la distance séparant la vis associée (11 ; 111) de l'extrémité libre de la patte de pincement (13 ; 113) qui est la plus haute à l'état monté est plus petite que la distance correspondante pour l'autre patte de pincement (14 ; 114).

2. Fixation pour bavette de garde-boue suivant la revendication 1, caractérisée en ce que les vis (11, 12 ; 111, 112) sont disposées chacune sur l'axe médian longitudinal de la patte de pincement associée (13, 114 ; 113, 114).

3. Fixation pour bavette de garde-boue suivant l'une des revendications 1 et 2, caractérisée en ce que le bord extérieur (16) de l'extrémité libre d'au moins la patte de pincement (14) qui est la plus basse à l'état monté fait avec la ligne de liaison des deux vis (11, 12) un angle aigu dont le sommet est situé, à l'état monté, plus haut que la plus haute des deux vis (11).

4. Fixation pour bavette de garde-boue suivant la revendication 3, caractérisée en ce que les bords extérieurs (15, 16) des deux pattes de pincement (13, 14) sont situés sur une droite commune.

5. Fixation pour bavette de garde-boue suivant l'une des revendications 1 à 4, caractérisée en ce que sur le côté de la partie de pincement (10 ; 110) qui est situé à l'opposé des pattes de pincement (13, 14 ; 113, 114), il est prévu au moins une partie coudée (19, 20 ; 119, 120) destinée à venir en prise avec la partie de pince (6, 21, 22; 106).

6. Fixation pour bavette de garde-boue suivant l'une des revendications 1 à 5, caractérisée en ce que la partie de pincement (10 ; 110) comporte des trous taraudés pour les vis (11, 12 ; 111, 112).

7. Fixation pour bavette de garde-boue suivant l'une des revendications 1 à 6, caractérisée en ce que la partie de pince est constituée d'une tôle de renforcement (6) qui, à l'état monté, s'étend sur la surface de la zone de fixation qui est située à l'opposé du retour d'aile (2) et qui comporte des pattes (21, 22) destinées à la prise des vis (11, 12).

8. Fixation pour bavette de garde-boue suivant l'une des revendications 1 à 6, caractérisée en ce que, du côté définissant l'ouverture de pincement, la partie de pince (106) comporte un évidement central qui est ouvert du côté opposé aux vis (111, 112) et dont les côtés sont formés par deux pattes de pince (121, 122) et en ce que les deux zones d'angle (137, 138) des extrémités libres des pattes de pince (121, 122) sont pliées en direction de la partie de pincement (110).
